# FASCICULE DE BREVET EUROPEEN

(11) **EP 0 680 874 B1**
(45) Date de publication et mention de la délivrance du brevet: **29.07.1998**
(21) Numéro de dépôt: 95400999.9
(22) Date de dépôt: 02.05.1995
(51) Int. Cl.: B64C 27/82, F01D 9/04

(54) **Redresseur à aubes pour dispositif anti-couple à rotor et stator redresseur carénés d'hélicoptère**
Schaufelleitstator einer Gegendrehmomentvorrichtung mit einem eingelassenen Heckrotor und Abrichtstator eines Hubschraubers
Vane guide stator for anti-torque device with shrouded rotor and straightening stator for helicopters

(30) Priorité: 04.05.1994 FR 9405480
(43) Date de publication de la demande: 08.11.1995
(73) Titulaire: EUROCOPTER, F-13725 Marignane Cédex (FR)
(72) Inventeur: Barquet, Henri Fernand, F-13220 Chateauneuf-les-Martigues (FR); Arnaud, Rémy Elian, F-13127 Vitrolles (FR)
(74) Mandataire: Bérogin, Francis

(56) Documents cités:
- FR-A- 2 559 423
- GB-A- 2 145 774
- US-A- 5 272 869
- PROCEEDINGS OF THE NINETEENTH EUROPEAN ROTORCRAFT FORUM, 14 Septembre 1993 CERNOBBIO (ITALY), pages D4-1-D4-13, VIALLE, ARNAUD 'A NEW GENERATION OF FENESTRON FAN-IN-FIN TAIL ROTOR ON EC 135'

## Description

L'invention concerne les dispositifs anti-couple du type comprenant un rotor multipale à pas variable ainsi qu'un stator redresseur à aubes profilées fixées en aval du rotor, et qui sont carénés dans les parties arrière d'hélicoptères à un seul rotor principal ou sustentateur, comme décrit dans le brevet français FR 2 534 222 de la demanderesse, et l'invention se rapporte plus précisément à un stator redresseur à aubes et à un procédé de fabrication d'une aube d'un tel redresseur.

Par FR 2 534 222, on connait un dispositif anti-couple à rotor arrière et stator redresseur carénés pour hélicoptère, comportant une veine, d'axe sensiblement transversal à l'hélicoptère, et dans laquelle sont disposés, d'une part, le rotor, sensiblement coaxial à ladite veine, et engendrant un écoulement d'air transversal, et d'autre part, le stator redresseur, comportant une pluralité d'aubes profilées fixées à l'intérieur de ladite veine en aval du rotor par rapport à l'écoulement d'air, et agencées de façon sensiblement radiale par rapport à ladite veine pour pouvoir récupérer de l'énergie de rotation de l'écoulement d'air à la sortie du rotor sous forme d'une poussée axiale d'anti-couple, s'ajoutant à celle produite par la rotation du rotor dans la veine, sans augmentation de la puissance transmise à cet effet au rotor.

Le brevet FR 2 534 222 propose également que les aubes du redresseur s'étendent entre un corps central fixe, sensiblement coaxial dans la veine, et la paroi annulaire de la veine de carénage, et qu'elles assurent à elles seules la liaison mécanique entre ce corps fixe et ladite paroi, et donc la fixation du corps fixe et du rotor, monté en rotation sur ce corps, dans la veine, en remplacement de bras supports, souvent au nombre de trois, généralement utilisés pour assurer cette liaison mécanique entre le corps fixe et la paroi de la veine.

Il est encore proposé dans le brevet précité que la veine présente, de l'amont vers l'aval, une entrée convergente à bord arrondi, une partie cylindrique, dans laquelle tournent les pales du rotor, et un divergent se terminant par une sortie divergente, le redresseur étant disposé dans le divergent, et les aubes qui le constituent pouvant être indépendantes les unes des autres, et à profil aérodynamique constant et vrillage nul, par exemple un profil du type NACA 65A10.

Un tel redresseur de flux à aubes fixes profilées remplit simultanément plusieurs fonctions et procure des avantages importants :
aux plans aérodynamiques et acoustiques, les aubes redressent le flux d'air en sortie du rotor et permettent ainsi de transformer une partie de l'énergie de rotation du flux d'air en poussée anti-couple supplémentaire, et le remplacement des bras supports connus [le plus souvent cylindriques et de diamètres relativement importants, baignés dans le flux du rotor et constituant l'une des sources de bruit importantes du dispositif par le bruit d'interaction entre le rotor et les bras supports] par des aubes profilées diminue la traînée tout en diminuant l'émission acoustique du dispositif caréné ;
aux plans du passage des efforts et de la rigidité, le redresseur reliant la structure de l'hélicoptère à l'ensemble mécanique monté dans la veine permet de passer tous les efforts du moyeu du rotor, de la boîte de transmission arrière (pour l'entraînement en rotation du rotor) et de la commande collective du pas des pales du rotor à la paroi de la veine, ces efforts étant mieux répartis par les aubes dans la carène, de sorte que l'utilisation de nervures de reprise d'effort dans cette dernière s'avère inutile, le redresseur augmentant la rigidité de l'ensemble du fait que ses aubes procurent des points de reprise des efforts sur la paroi de la veine plus nombreux qu'un tripode classique de bras supports.

Le problème à la base de l'invention est de proposer un redresseur à aubes dont la structure soit simple et économique et adaptée à une fixation aisée et indépendante de chaque aube, d'une manière qui lui permette de remplir avantageusement les fonctions simultanées précitées. Un autre objet de l'invention est de proposer un procédé de réalisation économique des aubes de tels redresseurs.

A cet effet, l'invention a pour objet un redresseur à aubes, pour un dispositif anti-couple d'hélicoptère du type connu par FR 2 534 222 et comprenant :
- une veine, d'axe sensiblement transversal à l'hélicoptère et traversant une carène dans la partie arrière de l'hélicoptère,
- un rotor, sensiblement coaxial à la veine, et monté en rotation dans la veine sur un corps central, également sensiblement coaxial à la veine, de sorte que sa rotation engendre un écoulement d'air dans la veine, et
- un stator redresseur, fixé dans la veine en aval du rotor par rapport au sens d'écoulement de l'air, et comportant des aubes présentant, chacune, une partie courante à profil aérodynamique redressant le flux d'air en aval du rotor vers l'axe de la veine, ainsi qu'un pied d'aube et un bout d'aube aux extrémités respectives de la partie courante, et par lesquels l'aube est liée respectivement au corps central et à la paroi annulaire de la veine, de façon à supporter le corps dans cette dernière, et le redresseur se caractérise en ce que chaque aube comprend une partie centrale métallique creuse, formant au moins sa partie courante, et en ce que l'un au moins de ses pied et bout d'aube est agencé en embout muni d'au moins une patte transversale de fixation au corps central ou à la paroi de la veine.

Selon une réalisation avantageusement économique, la partie centrale creuse est un tronçon de profilé creux, de section, de préférence constante, correspondant au profil aérodynamique, de préférence sans vrillage, s'étendant du pied d'aube au bout d'aube.

Dans ce cas, et selon un premier exemple simple de réalisation, au moins un embout de pied ou de bout d'aube comprend un organe emmanché dans une partie d'extrémité correspondante du tronçon de profilé, et portant la ou les pattes de fixation correspondantes, qui s'étendent transversalement à l'envergure de l'aube à l'extérieur dudit tronçon de profilé.

Mais il est également possible que, selon un second exemple simple de réalisation, au moins un embout de pied ou de bout d'aube est agencé en manchon, dans lequel est engagée une partie d'extrémité du tronçon de profilé, le manchon portant la ou les pattes de fixation correspondantes.

Cependant, selon le mode de réalisation le plus avantageux, car le plus léger, au moins un embout de pied ou de bout d'aube est d'une seule pièce avec le tronçon de profilé et chacune de ses pattes de fixation est cambrée par rapport à l'extrados et/ou l'intrados de l'aube que ladite patte prolonge.

Dans ces trois modes de réalisation, l'aube assure une bonne liaison mécanique si, avantageusement, chaque patte de fixation d'un embout de pied ou de bout d'aube s'étend au-dessus de la partie d'extrados et/ou au-dessous de la partie d'intrados de l'aube correspondante, et, de préférence, est cintrée avec une courbure correspondant sensiblement à celle de la surface du corps central ou de la paroi de la veine sur laquelle ladite patte est destinée à être fixée.

Afin d'alléger le redresseur, chaque aube est avantageusement telle que son épaisseur, dans la portion centrale de sa partie creuse, est inférieure à son épaisseur dans les portions d'extrémité de ladite partie creuse.

La rigidité des aubes et de leur liaison au corps central et à la veine est améliorée, si, de plus, chaque aube est telle qu'elle comprend un longeron raccordant la partie d'extrados à la partie d'intrados de l'aube, et au droit duquel s'étend au moins une patte de fixation de l'un au moins des embouts de pied et de bout d'aube.

En outre, pour faciliter la liaison des aubes, en particulier dans le divergent de la veine, et pour permettre le réglage de la position du redresseur, et donc du corps central et du rotor dans la veine, il est avantageux que la ou les pattes de fixation se fixent par rivetage sur l'extérieur du corps central au pied d'aube et par vissage et sur au moins un insert monté dans la paroi de la veine, au bout d'aube, avec, en cas de besoin, interposition d'une cale amovible sous la ou les pattes de fixation du bout d'aube, pour effectuer le centrage du redresseur dans la veine.

En outre, pour diminer le bruit d'interaction entre les pales et les aubes, et pour reprendre le couple de réaction à la rotation du rotor en compression dans les aubes, et non plus en flexion, afin de diminuer leur déformée et d'augmenter encore la rigidité de l'ensemble, il est avantageux que les pattes de fixation du pied et/ou du bout d'aube soient inclinées et/ou cintrées par rapport au plan longitudinal s'étendant selon l'envergure et passant par la corde de l'aube, de sorte que l'aube, fixée entre le corps central et la paroi de la veine, est inclinée sur la direction radiale par rapport à l'axe de la veine, de préférence d'un angle ν compris entre environ 0° et environ 25°.

De plus, pour diminuer encore le bruit d'interaction entre les pales du rotor et les aubes du redresseur, déjà réduit par l'inclinaison des aubes sur la direction radiale, il est avantageux que les pattes de fixation du pied et/ou du bout d'aube soient inclinées et/ou cintrées par rapport audit plan longitudinal passant par la corde de l'aube de sorte que l'aube, fixée sur le corps central et sur la veine, est inclinée en flèche de son pied vers son bout et de l'amont vers l'aval dans la veine, de préférence d'un angle Ψ compris entre environ 0° et environ 6°.

L'invention a également pour objet un procédé de fabrication d'une aube de redresseur à profil aérodynamique, pour, d'une part, supporter un corps central sensiblement coaxialement dans une veine traversant une partie arrière d'hélicoptère et d'axe sensiblement transversal à l'hélicoptère, et en aval d'un rotor sensiblement coaxial, monté en rotation sur le corps et tournant dans la veine, et, d'autre part, redresser, en aval du rotor, le flux d'air engendré par la rotation du rotor dans la veine, comme connu par FR 2 534 222, et le procédé selon l'invention se caractérise en ce qu'il comprend les étapes consistant à :
- filer un profilé métallique creux de section correspondant au profil aérodynamique de l'aube,
- découper un tronçon de profilé de longueur au moins égale à l'envergure de la partie profilée de l'aube, et
- agencer au moins une extrémité du tronçon de profilé en embout muni d'au moins une patte de fixation, pour fixer l'embout respectivement sur le corps ou sur la paroi de la veine.

Dans le mode préféré de mise en oeuvre, il comprend de plus les étapes consistant à détourer au moins une partie d'extrémité du tronçon de profilé au niveau du bord d'attaque et du bord de fuite de l'aube, de façon à former au moins un prolongement de l'extrados et au moins un prolongement de l'intrados, puis à cambrer lesdits prolongements transversalement à l'aube de façon à former lesdites pattes de fixation.

Avantageusement de plus, il comprend l'étape consistant à usiner chimiquement au moins l'extérieur de la partie centrale du tronçon de profilé creux, afin d'en réduire l'épaisseur et donc le poids, et, de plus, il peut consister à cintrer et/ou incliner au moins une patte de fixation d'un embout d'aube, d'une manière à permettre la conformation de la patte à la forme du corps ou de la veine et/ou l'inclinaison de l'aube en flèche du corps vers la veine et de l'amont vers l'aval de la veine et/ou par rapport à la direction radiale dans la veine.

D'autres avantages et caractéristiques de l'invention ressortiront de la description donnée ci-dessous, à titre non limitatif, d'exemples de réalisation décrits en référence aux dessins annexés sur lesquels :
- la figure 1 est une vue en perspective de 3/4 arrière d'un dispositif anti-couple caréné, avec rotor et stator redresseur disposés dans une veine traversant la partie arrière d'un hélicoptère, le rotor étant représenté sorti de la veine avec arrachement partiel, pour plus de clarté,
- la figure 2 est une vue schématique partielle, en élévation latérale depuis la sortie de la veine, du redresseur de la figure 1,
- la figure 3 est une coupe selon III-III de la figure 2, et avec une coupe axiale de la liaison d'un bout d'aube à la paroi de la veine,
- la figure 4 représente, à plus grande échelle, la coupe axiale détaillée de la liaison du bout d'aube à la veine,
- la figure 5 est une vue à plus grande échelle et de l'arrière d'une aube du redresseur de la figure 2,
- la figure 6 est une vue en élévation latérale selon la flèche VI de l'aube de la figure 5,
- la figure 7 est une vue en coupe selon VII-VII de l'aube de la figure 5,
- les figures 8 et 9 sont des coupes transversales de l'aube selon VIII-VIII et IX-IX de la figure 7,
- les figures 10 et 11 sont des coupes partielles selon X-X et XI-XI de la figure 6, respectivement au niveau du pied et du bout de l'aube,
- les figures 12 et 13 sont des vues selon les flèches XII et XIII respectivement sur la figure 5 et sur la figure 2 et montrant les pattes de fixation du pied et du bout de l'aube,
- la figure 14 est une coupe longitudinale partielle d'une variante de l'aube des figures précédentes, la coupe étant limitée aux parties du pied et du bout de l'aube,
- la figure 15 est une vue schématique et partielle représentant de l'arrière la liaison du pied d'un second exemple d'aube au corps, et
- les figures 16 et 17 sont des vues correspondant sensiblement et respectivement aux figures 5 et 6 pour un troisième exemple d'aube.

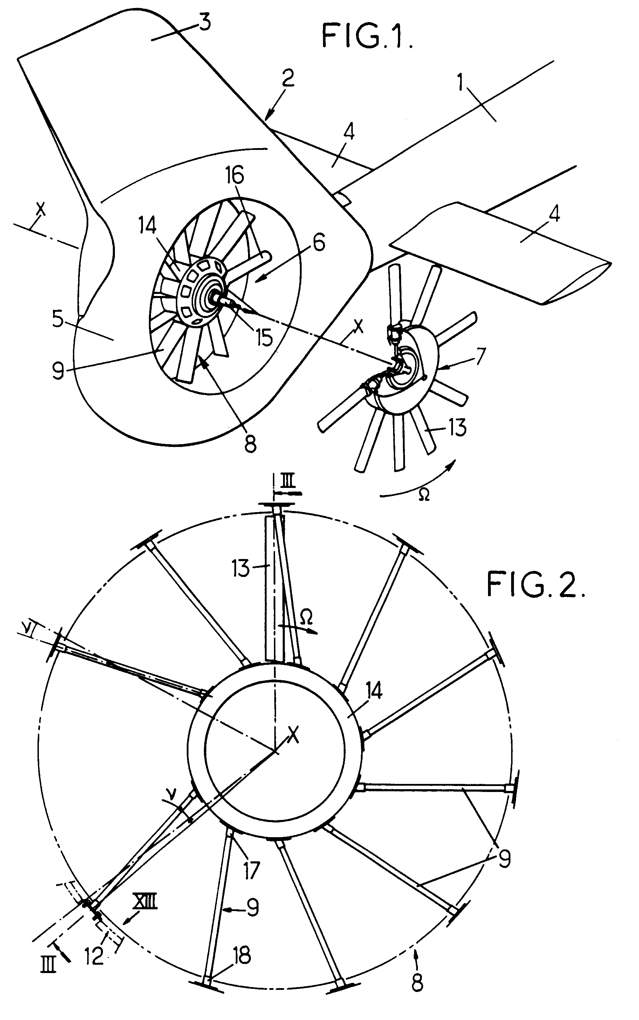

Sur la figure 1, la poutre de queue 1 d'un hélicoptère, dont le fuselage et l'unique rotor principal ne sont pas représentés, supporte à son extrémité arrière un empennage 2, dont la partie supérieure est aménagée en dérive verticale 3, et une dérive horizontale à deux plans 4 s'étendant de part et d'autre de la poutre 1.

La base de l'empennage 2 est agencée en carène 5 traversée transversalement par une veine 6 d'écoulement d'air d'un dispositif anti-couple caréné comprenant également un rotor 7 multipale à pas variable, monté rotatif et sensiblement coaxial dans la veine 6, ainsi qu'un stator redresseur 8, fixé en aval du rotor 7 dans la veine 6 par rapport au sens d'écoulement du flux d'air traversant cette dernière, et comportant des aubes fixes 9.

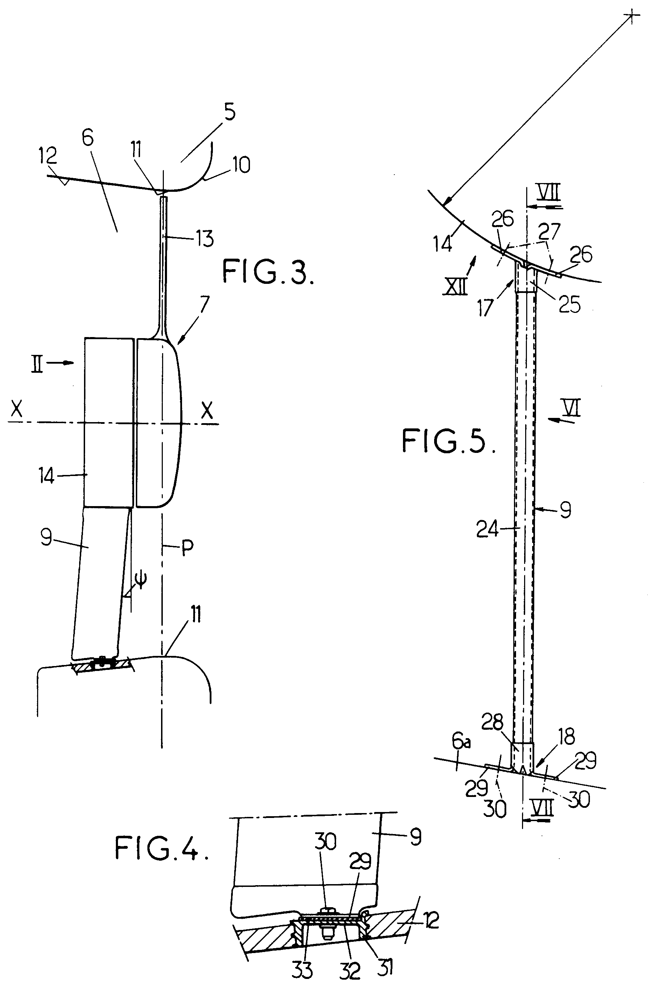

La veine 6 présente, autour de son axe X-X sensiblement transversal à l'axe longitudinal de l'hélicoptère, une forme sensiblement de révolution décrite en référence à la figure 3, et comprenant une entrée convergente 10, à bord arrondi, prolongée, vers la sortie de la veine 6, par une partie cylindrique 11, elle-même prolongée jusqu'à la sortie par un divergent 12. Le rotor 7 est monté dans la veine 6 du côté de son entrée et de sorte que ses pales 13 tournent dans la partie cylindrique 11 de la veine 6, les axes de changement de pas des pales 13 définissant un plan P de rotation du rotor, dans lequel ils se déplacent et qui est sensiblement perpendiculaire à l'axe X-X de la veine carénée 6. Le rotor 7 est monté et entraîné en rotation sur un corps central 14, de forme externe cylindro-conique et sensiblement coaxial à la veine 6, ce corps 14 étant solidaire de la structure de l'empennage 2 par l'intermédiaire des aubes 9 du redresseur 8, qui maintiennent le corps 14 au centre de la veine 6 et du côté de sa sortie par rapport au rotor 7.

Le corps 14 est réalisé par usinage d'un bloc d'alliage d'aluminium à partir d'une ébauche éventuellement matricée. De façon connue, le corps 14 enveloppe un mécanisme d'entraînement en rotation du rotor 7 par un arbre moteur 15, lui-même entraîné à partir d'un arbre de transmission traversant un bras 16 et relié à une sortie annexe de la boîte de transmission principale de l'hélicoptère. Une partie du bras 16 est disposée sensiblement radialement dans la veine 6, à la place sensiblement de l'une des aubes 9 du redresseur 8, dans l'espace délimité entre les deux aubes 9 les plus écartées l'une de l'autre sur la figure 2. De façon également connue, pour faire varier l'amplitude de la poussée transversale anti-couple, engendrée par la rotation du rotor 7 dans la veine 6 créant un écoulement d'air guidé dans cette dernière, le corps 14 et le rotor 7 comprennent un dispositif de commande collective du pas des pales 13, actionné par une bielle de commande, non représentée, car le bras 16 de la figure 1 sert de carénage à l'arbre de transmission et à cette bielle.

Pour ce qui concerne la structure, la configuration et le fonctionnement du mécanisme d'entraînement en rotation, appelé boîte de transmission arrière, et du dispositif de commande collective du pas des pales 13 qui sont logés dans le corps 14, ainsi que du rotor 7, on se reportera avantageusement aux brevets français FR 1 531 536 et américains US-3,594,097 et US-4,626,173 de la demanderesse, qui sont incorporés dans le présent mémoire descriptif par voie de référence, car ces organes ne font pas l'objet de l'invention.

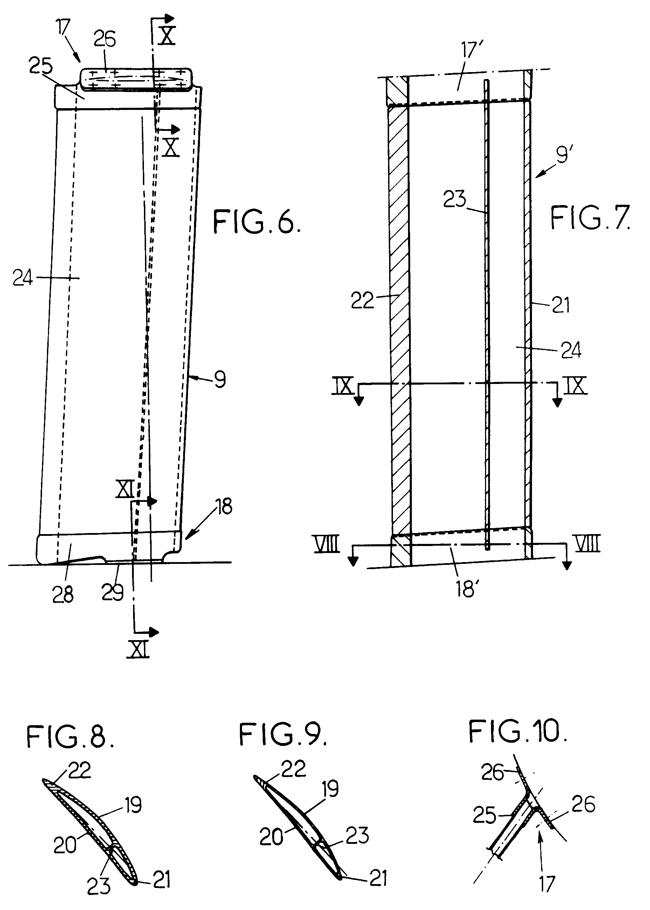

Les aubes 9, fixées dans la veine 6 en aval des pales 13 du rotor 7, sans toutefois sortir du divergent 12 de la veine 6, assurent une récupération de l'énergie de rotation de l'écoulement d'air en aval des pales 13, en redressant cet écoulement vers l'axe X-X de la veine 6, et en procurant un supplément de poussée anti-couple, comme expliqué dans le brevet français FR 2 534 222 de la demanderesse, dont la description est incorporée dans le présent mémoire descriptif par voie de référence, en particulier pour ce qui concerne la description des figures 4 et 5 de ce brevet.

Le redressement du flux d'air par les aubes 9 est notamment assuré par le choix approprié du profil aérodynamique dissymétrique des aubes 9, et en particulier de sa cambrure et de son calage angulaire par rapport à l'axe X-X de la veine 6.

Dans l'exemple des figures 1 à 3, le redresseur 8 dans une veine 6 de 1 m de diamètre au niveau de sa partie cylindrique 11, comprend dix aubes 9 à profil aérodynamique et le bras de transmission 16, qui sont régulièrement répartis en direction circonférentielle autour de l'axe X-X. Toutefois, le bras 16 est sensiblement radial et de section circulaire, alors que chaque aube 9 présente un profil aérodynamique de type NACA 65 avec par exemple une épaisseur relative de 10 %, une cambrure constante, choisie entre environ 21° et environ 27°, par exemple 23°, et un calage angulaire fixe choisi entre environ 2° et environ 3°, par exemple 2,5°, et orienté à piquer. En outre, chaque aube 9 n'est pas radiale, mais inclinée sur la direction radiale d'un angle ν compris entre environ 0° et environ 25°, mesuré sur l'envergure de l'aube 9 à 0,8 R où R est le rayon de la veine 6 comme représenté sur la figure 2, cette inclinaison étant assurée du pied 17 de chaque aube 9, par lequel elle est fixée au corps 14, vers le bout 18 de l'aube 9, par lequel elle est fixée à la paroi latérale et annulaire 6a de la veine 6 de carénage, dans le sens contraire au sens de rotation des pales 13 du rotor 7, indiqué par la flèche Ω. Ce calage angulaire des aubes 9 par rapport aux radiales fait passer le couple de réaction à la rotation du rotor 7, qui sollicite le corps 14, en compression dans les aubes 9, et non plus en flexion, ce qui accroît la rigidité du support du corps 14, des organes qu'il enveloppe et du rotor 7 dans la veine 6.

Cette inclinaison ν, par exemple de 10°, diminue également le bruit de rotation du rotor 7, car elle évite que l'interférence entre le sillage d'une pale 13 et une aube 9 ne se produise simultanément sur toute l'envergure commune à la pale et à l'aube, puisque les pales 13 sont sensiblement radiales par rapport à l'axe X-X de la veine 6.

Le pied 17 et le bout 18 de chaque aube 9, qui se rapportent individuellement sur la partie cylindrique du corps 14 et sur la surface tronconique du divergent 12, sont aussi agencés pour que chaque aube 9 soit de plus inclinée en flèche de son pied 17 vers son bout 18 et de l'amont vers l'aval dans la veine 6, d'un angle Ψ, comme montré sur la figure 3, choisi entre environ 0° et environ 6°, par exemple 4°. Cette inclinaison Ψ permet d'écarter le bord d'attaque des aubes 9 du plan de rotation P des pales 13, et donc du bord de fuite de ces dernières, en particulier dans la partie périphérique de la veine 6, ce qui est favorable à une diminution du bruit d'interférence entre les pales 13 et les aubes 9. Simultanément, dans la partie centrale de la veine 6, les aubes 9 peuvent maintenir le corps 14 à proximité du plan P de rotation du rotor 7, ce qui favorise un bon centrage de ce dernier dans la veine 6.

Pour fabriquer les aubes 9, on commence par réaliser par filage un profilé métallique creux, par exemple en alliage d'aluminium, et dont la section constante correspond au profil aérodynamique choisi pour l'aube 9. On découpe ensuite un tronçon de profilé 9' dont la longueur n'est pas sensiblement inférieure à l'envergure de l'aube 9, comme représenté sur la figure 7, et est même supérieure à l'envergure, dans un premier exemple, pour former des pattes de fixation d'une seule pièce avec l'aube 9, comme décrit ci-dessous. La section constante de ce tronçon de profilé 9' est représentée sur la figure 8 : l'extrados convexe 19 de ce profilé est relié à l'intrados 20 légèrement concave non seulement au niveau de son bord d'attaque 21 et de son bord de fuite 22, mais également par un longeron 23. Les parties d'extrémité 17' et 18' du tronçon de profilé 9' sont ensuite usinées, par exemple détourées, en enlevant à chaque extrémité 17' et 18' de la matière dans la zone du bord d'attaque 21 et du bord de fuite 22 (et de manière plus importante du bord de fuite 22 vers le longeron 23 à l'extrémité 18' du côté destiné à former le bout d'aube 18), puis en enlevant de la matière dans les extrémités du longeron 23 (voir figure 7) de sorte à former à chaque extrémité 17' ou 18', des prolongements de l'extrados 19 et de l'intrados 20. Puis ces prolongements sont cambrés transversalement à l'aube 9, de sorte qu'à chaque extrémité 17' et 18', le prolongement de l'extrados 19 forme une patte transversale 26 ou 29 s'étendant du côté de l'extrados 19 et le prolongement de l'intrados 20 forme une autre patte transversale 26 ou 29 s'étendant du côté de l'intrados 20. La partie centrale entre les parties d'extrémité 17' et 18', destinée à constituer la partie courante à profil aérodynamique 24 de l'aube 9, est ensuite usinée chimiquement, par l'extérieur, afin de réduire l'épaisseur de cette partie courante 24 tout en laissant suffisamment de matière dans les zones d'extrémité mécaniquement les plus chargées, par leur liaison au corps 14 et à la paroi de la veine 6.

La figure 9 représente le profil aérodynamique de la partie courante 24 de l'aube 9, amincie par rapport au profil de la figure 8, du tronçon 9' de profilé creux filé.

Le pied d'aube 17 est ainsi agencé en embout de pied 25 muni de deux pattes de fixation 26 d'une seule pièce avec la partie courante 24.

De manière analogue, le bout d'aube 18 est agencé en embout 28 qui comprend également deux pattes de fixation 29 externes au profilé mais d'une seule pièce avec ce dernier et généralement transversales au plan longitudinal passant par la corde de l'aube 9, comme le sont également les pattes de fixation 26 de l'embout 25.

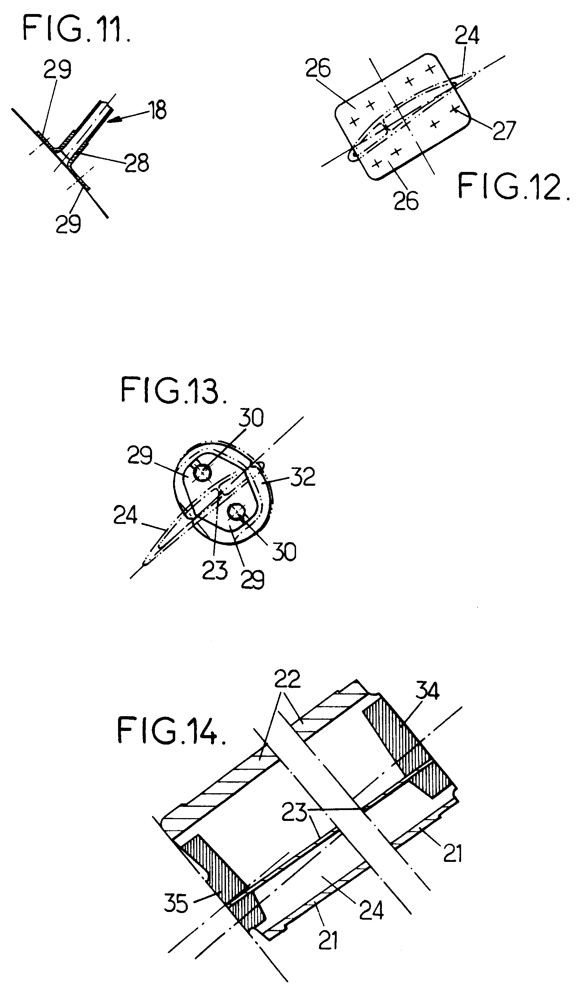

L'une des pattes 26 et l'une des pattes 29 s'étend au-dessus de la partie d'extrados 19 et l'autre au-dessous de la partie d'intrados 20 de l'aube 9, chaque patte 26 ayant sensiblement une forme rectangulaire à sommets arrondis, (comme montré sur la figure 12), qui s'étend sur la majeure partie de la corde de l'aube 9, tandis que chaque patte 29 a plutôt la forme sensiblement d'un trapèze à sommets arrondis, s'étendant au droit du longeron 23, et sur une plus faible portion de corde, comme montré par la figure 13. Les figures 5, 6, 10 et 11 montrent également que les pattes transversales 26 et 29 sont cintrées et inclinées de façon à présenter une courbure correspondant sensiblement et respectivement à celle de la surface externe du corps 14 et de la surface interne de la paroi de la veine 6a, sur lesquelles elles viennent s'appliquer pour y être fixées, par quatre rivets 27 pour chaque patte 26 sur le corps 14, comme montré par la figure 12, et par une vis 30 pour retenir chaque patte 29 sur la paroi de la veine 6a, comme montré par la figure 13. De ce fait, la courbure des pattes 26 est bien plus marquée que celle des pattes 29, qui peuvent en fait être sensiblement plates, vu leurs faibles dimensions par rapport au rayon de la veine 6. Les inclinaisons des pattes 26 et 29 par rapport à la partie courante 24 sont telles qu'elles donnent à l'aube 9 les angles d'inclinaison ν sur la direction radiale et Ψ en flèche (voir figures 2 et 3) lorsque le pied 17 et le bout 18 de l'aube 9 sont fixés respectivement au corps 14 et à la paroi 6a de la veine 6 par les pattes transversales 26 et 29.

Pour la fixation du bout d'aube 18 sur la paroi de veine 6a, un insert 31 présentant une facette d'appui 32 peut être scellé dans la paroi du divergent 12, comme représenté schématiquement sur les figures 3 et 4, de sorte que la facette 32 soit apparente sur la face interne du divergent 12 en affleurant sensiblement celle-ci. Chaque patte de fixation 29 est alors fixée par une vis 30 à la facette 32 avec interposition entre elles d'une cale pelable 33, pouvant être conservée ou enlevée, selon les besoins, pour effectuer le centrage du redresseur 8 dans la veine 6 et contrôler le jeu sous chaque pied 17 d'aube 9, pour limiter ainsi les contraintes de montage sur le corps 14.

Les aubes 9, et donc ainsi les ensembles redresseur 8, sont interchangeables.

La figure 14 représente partiellement en coupe une aube, telle que décrite ci-dessus, et comportant de plus deux bouchons de mousse 34 et 35, insérés dans les extrémités creuses de la partie courante 24, respectivement du côté du pied et du bout d'aube, afin d'empêcher les siflements que pourraient provoquer des écoulements d'air dans l'aube 9.

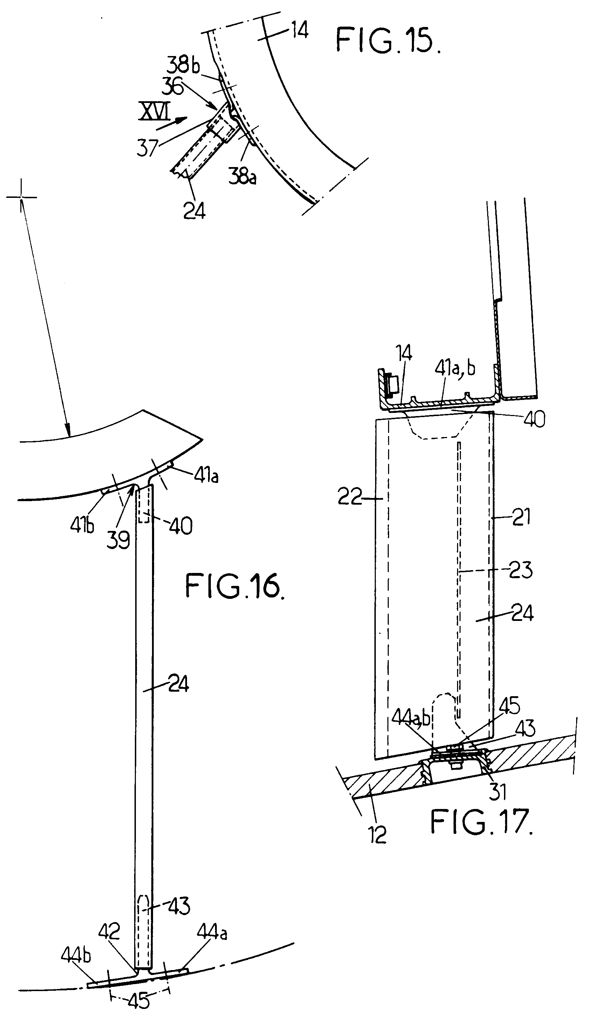

La figure 15 représente un second exemple d'aube, limité à son pied fixé au corps 14. La partie courante 24 de l'aube est formée d'un tronçon de profilé 9' coupé sensiblement à la longueur de l'envergure de l'aube, et dont les parties d'extrémité 17' et 18' ne sont ni détourées ni cambrées. Mais la partie centrale entre elles est usinée chimiquement pour diminuer son épaisseur. Puis le pied d'aube est réalisé en emmanchant et en solidarisant la partie d'extrémité 17' dans le manchon 37 d'un embout de pied 36, par exemple en tôle, et muni de deux pattes de fixation 38a et 38b solidaires du fond resserré et sensiblement refermé du manchon 37. Les pattes 38a et 38b peuvent être d'une seule pièce avec le manchon 37 et le prolonger transversalement à la partie courante 24, et/ou ne constituer qu'une seule patte de fixation, ne s'étendant éventuellement que d'un seul côté de l'aube.

De manière analogue, bien que non représentée, l'extrémité 18' du tronçon de profilé est emmanchée et solidarisée à l'intérieur d'un manchon d'un embout de bout d'aube comprenant également une ou deux pattes de fixation externes au manchon et généralement transversales au plan longitudinal passant par la corde de l'aube, afin de se présenter favorablement pour la fixation contre la paroi de la veine 6a.

Le troisième exemple d'aube des figures 16 et 17 ne se distingue essentiellement de celui décrit ci-dessus en référence à la figure 15 que par la réalisation des embouts rapportés du pied et du bout de l'aube et montés sur les extrémités du tronçon de profilé métallique creux.

Sur les figures 16 et 17, l'embout 39 du pied d'aube 17 comprend un organe métallique relativement massif 40, qui est emmanché et retenu dans l'extrémité correspondante du tronçon de profilé métallique creux constituant la partie courante 24 de l'aube. Cet élément 40 ou noyau est solidaire, par sa base, de pattes de fixation 41a et 41b qui sont repliées l'une au-dessus de la partie d'extrados 19 et l'autre au-dessous de la partie d'intrados 20 de la partie courante profilée 24, et qui sont cintrées et inclinées de la même manière que les pattes 26, 38a et 38b des exemples précédents. Les pattes 41a et 41b peuvent être d'une seule pièce de tôle avec le noyau 40, par exemple plié en U dans sa partie introduite dans le tronçon profilé de l'aube, et sont fixées chacune par quatre rivets sur la surface externe du corps 14, comme dans l'exemple des figures 5 à 13.

De même, l'embout 42 du bout d'aube comprend un organe ou noyau 43, relativement massif et métallique, emmanché et retenu dans l'extrémité correspondante du tronçon de profilé métallique creux formant la partie courante 24 de l'aube, ce noyau 43 portant également, par sa base, deux pattes de fixation 44a et 44b, qui sont inclinées transversalement, par rapport à l'envergure de l'aube, et éventuellement cintrées, de la même manière que les pattes de fixation des exemples précédents, pour être fixées, par exemple par deux vis 45, contre la face interne du divergent 12 de la veine 6, par l'intermédiaire d'un insert monolithique tel que 31 sur la figure 4. Comme pour l'embout 39 du pied d'aube, les pattes 44a et 44b de fixation de l'embout 42 du bout d'aube peuvent être d'une seule pièce avec le noyau 43, en tôle métallique repliée en U dans le tronçon de profilé.

La retenue des noyaux 40 et 43 des embouts 39 et 42 dans les extrémités correspondantes du tronçon de profilé creux, comme d'ailleurs la retenue des extrémités de ce tronçon profilé dans les manchons tels que 37 des embouts tels que 36 de l'exemple précédent (figure 15), peut être assurée par collage, soudage ou tout autre moyen approprié, cette solidarisation n'étant pas particulièrement critique dans la mesure où les aubes 9, du fait de leur inclinaison sur la direction radiale et dans le sens contraire à la rotation du rotor 7, sont sollicitées en compression entre le corps 14 et la paroi de la veine 6.

Bien entendu, l'embout du pied d'aube peut être de l'un des trois types décrits ci-dessus, et l'embout du bout d'aube d'un autre de ces trois types, avec une ou plusieurs pattes de fixation pour chacun.

Mais toutes les aubes d'un même redresseur ont de préférence la même structure pour d'évidentes raisons d'équilibrage, d'aérodynamique et d'interchangeabilité.

## Revendications

1. Redresseur à aubes, pour dispositif anti-couple d'hélicoptère comprenant :
- une veine (6), d'axe (X-X) sensiblement transversal à l'hélicoptère et traversant une carène (5) dans la partie arrière de l'hélicoptère,
- un rotor (7), sensiblement coaxial à la veine (6), et monté en rotation dans la veine (6) sur un corps central (14), également sensiblement coaxial à la veine (6), de sorte que sa rotation engendre un écoulement d'air dans la veine (6), et
- un stator redresseur (8), fixé dans la veine (6) en aval du rotor (7) par rapport au sens d'écoulement de l'air, et comportant des aubes (9) présentant, chacune, une partie courante (24) à profil aérodynamique redressant le flux d'air en aval du rotor (7) vers l'axe (X-X) de la veine (6), ainsi qu'un pied d'aube (17) et un bout d'aube (18) aux extrémités respectives de la partie courante (24), et par lesquels l'aube (9) est liée respectivement au corps central (14) et à la paroi annulaire (6a) de la veine (6), de façon à supporter le corps (14) dans cette dernière, le redressseur (8) étant caractérisé en ce que chaque aube (9) comprend une partie centrale métallique creuse, formant au moins sa partie courante (24), et en ce que l'un au moins de ses pied (17) et bout (18) d'aube (9) est agencé en embout (25, 28, 36, 39, 42) muni d'au moins une patte (26, 29, 38a, 38b, 41a, 41b, 44a, 44b) transversale de fixation au corps central (14) ou à la paroi de la veine (6).

2. Redresseur à aubes selon la revendication 1, caractérisé en ce que ladite partie centrale creuse est un tronçon de profilé creux (9'), de section correspondant au profil aérodynamique s'étendant du pied d'aube (17) au bout d'aube (18).

3. Redresseur à aubes selon la revendication 2, caractérisé en ce qu'au moins un embout de pied (39) ou de bout (42) d'aube comprend un organe (40, 43), emmanché dans une partie d'extrémité correspondante du tronçon de profilé (9'), et portant la ou les pattes de fixation (41a, 41b, 44a, 44b) correspondantes, qui s'étendent transversalement à l'envergure de l'aube à l'extérieur dudit tronçon de profilé (9').

4. Redresseur à aubes selon la revendication 2, caractérisé en ce qu'au moins un embout de pied (36) ou de bout d'aube est agencé en manchon (37), dans lequel est engagée une partie d'extrémité du tronçon de profilé (9'), le manchon (37) portant la ou les pattes de fixation correspondantes (38a, 38b).

5. Redresseur à aubes selon la revendication 2, caractérisé en ce qu'au moins un embout de pied (25) ou de bout (28) d'aube (9) est d'une seule pièce avec le tronçon de profilé (9') et chacune de ses pattes de fixation (26, 29) est cambrée par rapport à l'extrados (19) et/ou l'intrados (20) de l'aube (9) que ladite patte prolonge.

6. Redresseur à aubes selon l'une quelconque des revendications 1 à 5, caractérisé en ce que chaque patte de fixation (26, 29, 38a, 38b, 41a, 41b, 44a, 44b) d'un embout de pied (25, 36, 39) ou de bout (28, 42) d'aube s'étend audessus de la partie d'extrados (19) et/ou au-dessous de la partie d'intrados (20) de l'aube (9) correspondante, et/ou est cintrée avec une courbure correspondant sensiblement à celle de la surface du corps central (14) ou de la veine (6) sur laquelle ladite patte est destinée à être fixée.

7. Redresseur à aubes selon l'une quelconque des revendications 1 à 6, caractérisé en ce que l'épaisseur d'une aube, dans la portion centrale (24) de sa partie creuse, est inférieure à son épaisseur dans les portions d'extrémité (17', 18') de ladite partie creuse.

8. Redresseur à aubes selon l'une quelconque des revendications 1 à 7, caractérisé en ce qu'au moins une aube (9) comprend un longeron (23) raccordant la partie d'extrados (19) à la partie d'intrados (20) de l'aube (9), et au droit duquel s'étend au moins une patte (26, 29, 38a, 38b, 41a, 41b, 44a, 44b) de fixation de l'un au moins des embouts de pied (25, 36, 39) et de bout (28, 42) d'aube.

9. Redresseur à aubes selon l'une quelconque des revendications 1 à 8, caractérisé en ce que la ou les pattes de fixation (26) du pied d'au moins une aube (17) se fixent par rivetage (27) sur l'extérieur du corps central (14) et la ou les pattes de fixation (29) du bout d'aube (18) se fixent par vissage (30) sur au moins un insert (31) monté dans la paroi de la veine (6), avec, en cas de besoin, interposition d'une cale amovible (33) sous la ou les pattes de fixation (29) du bout d'aube (18), pour effectuer le centrage du redresseur (8) dans la veine (6).

10. Redresseur à aubes selon l'une quelconque des revendications 1 à 9, caractérisé en ce que les pattes de fixation (26, 29, 38a, 38b, 41a, 41b, 44a, 44b) du pied (17) et/ou du bout (18) d'au moins une aube (9) sont inclinées et/ou cintrées par rapport au plan longitudinal s'étendant selon l'envergure et passant par la corde de l'aube (9) de sorte que l'aube (9), fixée entre le corps central (14) et la paroi de la veine (6), est inclinée sur la direction radiale par rapport à l'axe (X-X) de la veine (6).

11. Redresseur à aubes selon l'une quelconque des revendications 1 à 10, caractérisé en ce que les pattes de fixation (26, 29, 38a, 38b, 41a, 41b, 44a, 44b) du pied (17) et/ou du bout (18) d'au moins une aube (9) sont inclinées et/ou cintrées par rapport au plan longitudinal passant par la corde de l'aube (9) de sorte que l'aube (9), fixée entre le corps central (14) et la paroi de la veine (6), est inclinée en flèche de son pied (17) vers son bout (18) et de l'amont vers l'aval dans la veine (6).

12. Procédé de fabrication d'une aube (9) de redresseur (8) à profil aérodynamique pour, d'une part, supporter un corps central (14) sensiblement coaxialement dans une veine (6) traversant une partie arrière d'hélicoptère et d'axe (X-X) sensiblement transversal à l'hélicoptère, et en aval d'un rotor (7) sensiblement coaxial, monté en rotation sur le corps (14) et tournant dans la veine (6), et, d'autre part, redresser, en aval du rotor (7), le flux d'air engendré par la rotation du rotor (7) dans la veine (6), caractérisé en ce qu'il comprend les étapes consistant à :
- filer un profilé métallique creux de section correspondant au profil aérodynamique de l'aube (9),
- découper un tronçon de profilé (9') de longueur au moins égale à l'envergure de la partie profilée de l'aube (9), et
- agencer au moins une extrémité du tronçon de profilé (9') en embout (25, 28, 36, 39, 42) muni d'au moins une patte de fixation (26, 29, 38a, 38b, 41a, 41b, 44a, 44b), pour fixer l'embout respectivement sur le corps (14) ou sur la paroi de la veine (6).

13. Procédé selon la revendication 12, caractérisé en ce qu'il comprend de plus les étapes consistant à détourer au moins une partie d'extrémité (17', 18') du tronçon de profilé (9') au niveau du bord d'attaque (21) et du bord de fuite (22) de l'aube (9), de façon à former au moins un prolongement de l'extrados (19) et au moins un prolongement de l'intrados (20), puis à cambrer lesdits prolongements transversalement à l'aube (9) de façon à former lesdites pattes de fixation (26, 29).

14. Procédé selon l'une des revendications 12 et 13, caractérisé en ce qu'il comprend de plus l'étape consistant à usiner chimiquement au moins l'extérieur de la partie centrale (24) du tronçon de profilé creux (9'), afin d'en réduire l'épaisseur.

15. Procédé selon l'une des revendications 12 à 14, caractérisé en ce qu'il consiste à cintrer et/ou incliner au moins une patte de fixation (26, 29, 38a, 38b, 41a, 41b, 44a, 44b) d'un embout d'aube (25, 28, 36, 39, 42), d'une manière à permettre la conformation de la patte à la forme du corps (14) ou de la paroi de la veine (6) et/ou l'inclinaison de l'aube (9) en flèche du corps (14) vers la veine (6) et de l'amont vers l'aval de la veine (6) et/ou par rapport à la direction radiale dans la veine (6).

## Claims

1. A flow-straightener with vanes, for a helicopter counter-torque device comprising:
- a duct (6) of axis (X-X) substantially transversal to the helicopter and passing through a fairing (5) in the rear part of the helicopter,
- a rotor (7) substantially coaxial with the duct (6) and mounted so that it can rotate in the duct (6) on a central body(14), also substantially coaxial to the duct (6) , so that its rotation generates a flow of air in the duct(6), and
- a flow-straightening stator(8), fixed into the duct (6) downstream of the rotor (7) with respect to the direction of flow of the air, and including vanes (9) each exhibiting a main vane section (24) with aerodynamic profile straightening out the airflow downstream of the rotor (7) toward the axis (X-X) of the duct (6) as well as a vane root (17) and a vane tip (18) at the respective ends of the main vane section (24), and via which the vane (9) is linked respectively to the central body (14) and to the annular wall (6a) of the duct (6), so as to support the body (14) in the latter, the flow-straightener being characterized in that each vane (9) comprises a hollow metal central part forming at least its main vane section (24), and in that at least one of its vane root (17) and tip (18) is set out as an end fitting (25, 28, 36, 39, 42) equipped with at least one transverse tab (26, 29, 38a, 38b, 41a, 41b, 44a, 44b) for fastening to the central body (14) or to the wall of the duct (6).

2. The flow-straightener with vanes as claimed in claim 1, characterized in that said hollow central part is a hollow profiled portion (9') of cross-section corresponding to the aerodynamic profile extending from the vane root (17) to the vane tip (18).

3. The flow-straightener with vanes as claimed in claim 2, characterized in that at least one vane root or vane tip end fitting (39, 42) comprises a member (40, 43) tightly fitted into a corresponding end part of the profiled portion (9') and carrying the corresponding fastening tab or tabs ( 41a, 41b, 44a, 44b) which extend transversely to the span of the vane outside said profiled portion (9').

4. The flow-straightener with vanes as claimed in claim 2, characterized in that at least one vane root or vane tip end fitting (36) is set out as a cuff (37) in which an end part of the profiled portion (9') is engaged, the cuff (37) carrying the corresponding fastening tab or tabs (38a, 38b).

5. The flow-straightener with vanes as claimed in claim 2, characterized in that at least one vane root or vane tip end fitting (25, 28) is of a single piece with the profiled portion (9') and each of its fastening tabs (26, 29) is cambered with respect to the suction face (19) and/or the pressure face (20) of the vane (9) which said tab extends.

6. The flow-straightener with vanes as claimed in any one of claims 1 to 5, characterized in that each fastening tab (26, 29, 38a, 38b, 41a, 41b, 44a, 44b) of a vane root or vane tip end fitting (25, 36, 39, 28, 42) extends above the suction face part (19) and/or below the pressure face part (20) of the corresponding vane (9) and/or is curved with a curvature substantially corresponding to that of the surface of the central body (14) or of the duct (6) to which said tab is intended to be fastened.

7. The flow-straightener with vanes as claimed in any one of claims 1 to 6, characterized in that the thickness of a vane, in the central portion (24) of its hollow part, is less than its thickness in the end portions (17', 18') of said hollow part.

8. The flow-straightener with vanes as claimed in any one of claim 1 to 7, characterized in that at least one vane (9) comprises a spar (23) connecting the suction face part (19) to the pressure face part (20) of the vane (9), and perpendicular to which there extends at least one tab (26, 29, 38a, 38b, 41a, 41b, 44a, 44b) for fastening at least one of the vane root and vane tip end fittings (25, 36, 39, 28, 42)

9. The flow-straightener with vanes as claimed in any one of claims 1 to 8 characterized in that, the fastening tab or tabs (26) of the root (27) of at least one vane are fastened by riveting (27) to the outside of the central body (14) and the fastening tab or tabs (29) of the vane tip (18) are fastened by screwing (30) on to at least one insert (31) fitted into the wall of the duct (6) with, if need be, interposition of a removable shim (33) under the tab or tabs (29) for fastening the vane tip (18), in order to center the flow-straightener (8) in the duct (6).

10. The flow-straightener with vanes as claimed in any one of claims 1 to 9, characterized in that the tabs (26, 29,38a,38b, 41a, 41b, 44a, 44b) for fastening the root (17) and/or tip (18) of at least one vane (9) are inclined and/or curved with respect to the longitudinal plane extending along the span and passing through the chord of the vane (9) so that the vane (9), fixed between the central body (14) and the wall of the duct (6), is inclined to the radial direction with respect to the axis (X-X) of the duct (6).

11. The flow-straightener with vanes as claimed in any one of claims 1 to 10, characterized in that the tabs (28, 29, 38a, 38b, 41a, 41b, 44a, 44b) for fastening the root (17) and/or the tip (18) of at least one vane (9) are inclined and/or curved with respect to the longitudinal plane passing through the chord of the vane (9) so that the vane (9), fixed between the central body (14) and the wall of the duct (6) is inclined at a slant from its root (17) to its tip (18) and from upstream to downstream within the duct (6).

12. A method for manufacturing a flow-straightening vane (9) with an aerodynamic profile in order, on the one hand, to support a central body (14) substantially coaxially within a duct (6) passing through a helicopter rear part and having an axis (X-X) substantially transversal to the helicopter, and downstream of a substantially coaxial rotor (7) mounted so that it rotates on the body (14) and rotating within the duct (6) and, on the other hand, to straighten out, downstream of the rotor (7), the airflow generated by the rotation of the rotor (7) within the duct (6), characterized in that it comprises the steps consisting in:
- extruding a hollow metal section of cross-section corresponding to the aerodynamic profile of the vane (9),
- cutting a section portion (9') of length at least equal to the span of the profiled part of the vane (9), and
- arranging at least one end of the section portion (9') as an end fitting (25, 28, 36, 39, 42) equipped with at least one fastening tab (26, 29, 38a, 38b, 41a, 41b,44a,44b) for fastening the end fitting respectively to the body (14) or to the wall of the duct (9).

13. The method as claimed in claim 12, characterized in that it additionally comprises the steps consisting in trimming off at least one end part (17', 18') of the section portion (9') at the leading edge (21) and the trailing edge (22) of the vane (9), so as to form at least one extension of the suction face (19) and at least one extension of the pressure face (20), then in cambering said extensions transversely to the vane (9) so as to form said fastening tabs (26, 29).

14. The method as claimed in any one of claims 12 and 13, characterized in that it additionally comprises the step consisting in chemically machining at least the outside of the central part (24) of the hollow section portion (9') in order to reduce the thickness thereof.

15. The method as claimed in any one of claims 12 to 14, wherein it consists in curving and/or inclining at least one fastening tab (26, 29, 38a, 38b, 41a, 41b, 44a, 44b) of a vane end fitting (25, 28, 36, 39, 42) in a way so as to allow the tab to be shaped to the shape of the body (14) or of the wall of the duct (6) and/or the inclination of the vane (9) at a slant from the body (14) toward the duct (6) and from upstream to downstream of the duct (6) and/or with respect to the radial direction within the duct (6).

## Patentansprüche

1. Schaufel-Leiteinrichtung für eine Hubschrauber-Gegendrehmomentvorrichtung, umfassend:
- einen Kanal (6), der eine zum Hubschrauber im wesentlichen quer verlaufende Achse (X-X) hat und einen Tragkörper (5) im Heckteil des Hubschraubers durchquert,
- einen Rotor (7), der zum Kanal (6) im wesentlichen koaxial ist und im Kanal (6) drehbar auf einem zentralen Körper (14) auch im wesentlichen koaxial zum Kanal (6) angebracht ist, so daß seine Drehung eine Luftströmung im Kanal (6) erzeugt, und
- einen Leiteinrichtungs-Stator (8), der im Kanal (6) in bezug auf die Luftströmungsrichtung strömungsabwärts vom Rotor (7) befestigt ist und Schaufeln (9) enthält, die jeweils einen Strömungsteil (24) mit aerodynamischem Profil, der den Luftstrom auf der Strömungsabwärtsseite des Rotors (7) zur Achse (X-X) des Kanals (6) hin leitet, sowie einen Schaufelfuß (17) und einen Schaufelkopf (18) an den jeweiligen Enden des Strömungsteils (24) aufweisen, durch welche die Schaufel (9) mit dem zentralen Körper (14) bzw. mit der ringförmigen Wand (6a) des Kanals (6) verbunden ist, um den Körper (14) in letzterem zu tragen, wobei die Leiteinrichtung (8) **dadurch gekennzeichnet** ist, daß jede Schaufel (9) einen hohlen metallischen Mittelteil enthält, der mindestens ihren Strömungsteil (24) bildet, und daß am Fuß (17) und/oder am Kopf (18) der Schaufel (9) ein Ansatz (25, 28, 36, 39, 42) angeordnet ist, der wenigstens mit einem quer verlaufenden Lappen (26, 29, 38a, 38b, 41a, 41b, 44a, 44b) zur Befestigung am zentralen Körper (14) oder an der Wand des Kanals (6) versehen ist.

2. Schaufel-Leiteinrichtung nach Anspruch 1, **dadurch gekennzeichnet**, daß der hohle Mittelteil ein Hohlprofilstück (9') mit einem Querschnitt ist, der dem sich vom Schaufelfuß (17) zum Schaufelkopf (18) erstreckenden aerodynamischen Profil entspricht.

3. Schaufel-Leiteinrichtung nach Anspruch 2, **dadurch gekennzeichnet**, daß zumindest ein Schaufelfußansatz (39) oder ein Schaufelkopfansatz (42) ein Organ (40, 43) enthält, das in einem entsprechenden Endteil des Profilstücks (9') eingesteckt ist und den oder die entsprechenden Befestigungslappen (41a, 41b, 44a, 44b) trägt, die sich quer zur Schaufelspannweite vom Profilstück (9') aus nach außen erstrecken.

4. Schaufel-Leiteinrichtung nach Anspruch 2, **dadurch gekennzeichnet**, daß zumindest an einem Schaufelfußansatz (36) oder an einem Schaufelkopfansatz eine Muffe (37) angeordnet ist, in die ein Endteil des Profilstücks (9') eingreift, wobei die Muffe (37) den oder die entsprechenden Befestigungslappen (38a, 38b) trägt.

5. Schaufel-Leiteinrichtung nach Anspruch 2, **dadurch gekennzeichnet**, daß zumindest ein Fußansatz (25) oder ein Kopfansatz (28) der Schaufel (9) mit dem Profilstück (9') aus einem Stück ist und jeder der Befestigungslappen (26, 29) in bezug auf die Saugseite (19) und/oder die Druckseite (20) der Schaufel (9) gewölbt ist, was den Lappen verlängert.

6. Schaufel-Leiteinrichtung nach einem der Ansprüche 1 bis 5, **dadurch gekennzeichnet**, daß jeder Befestigungslappen (26, 29, 38a, 38b, 41a, 41b, 44a, 44b) eines Schaufelfußansatzes (25, 36, 39) oder Schaufelkopfansatzes (28, 42) sich oberhalb des Saugseitenteils (19) und/oder unterhalb des Druckseitenteils (20) der entsprechenden Schaufel (9) erstreckt und/oder mit einer Krümmung gewölbt ist, die im wesentlichen derjenigen der Oberfläche des zentralen Körpers (14) oder des Kanals (6) entspricht, auf dem der Lappen befestigt werden soll.

7. Schaufel-Leiteinrichtung nach einem der Ansprüche 1 bis 6, **dadurch gekennzeichnet**, daß die Dicke einer Schaufel im Mittelbereich (24) seines hohlen Teils geringer ist als ihre Dicke in den Endbereichen (17', 18') des hohlen Teils.

8. Schaufel-Leiteinrichtung nach einem der Ansprüche 1 bis 7, **dadurch gekennzeichnet**, daß wenigstens eine Schaufel (9) einen Längsträger (23) enthält, der den Saugseitenteil (19) mit dem Druckseitenteil (20) der Schaufel (9) verbindet, und sich senkrecht von diesem wenigstens ein Befestigungslappen (26, 29, 38a, 38b, 41a, 41b, 44a, 44b) wenigstens eines Schaufelfußansatzes (25, 36, 39) oder Schaufelkopfansatzes (28, 42) erstreckt.

9. Schaufel-Leiteinrichtung nach einem der Ansprüche 1 bis 8, **dadurch gekennzeichnet**, daß der oder die Befestigungslappen (26) des Fußes wenigstens einer Schaufel (17) durch Vernietung (27) außen am zentralen Körper (14) befestigt sind und der oder die Befestigungslappen (29) des Schaufelkopfes (18) durch Verschraubung (30) an zumindest einem Einsatz (31) befestigt sind, der in der Wand des Kanals (6) angebracht ist mit im Bedarfsfall einer Zwischenanordnung eines entfernbaren Unterlegkeils (33) unter dem oder den Befestigungslappen (29) des Schaufelkopfes (18) zur Durchführung der Zentrierung der Leiteinrichtung (8) im Kanal (6).

10. Schaufel-Leiteinrichtung nach einem der Ansprüche 1 bis 9, **dadurch gekennzeichnet**, daß die Befestigungslappen (26, 29, 38a, 38b, 41a, 41b, 44a, 44b) des Fußes (17) und/oder des Kopfes (18) wenigstens einer Schaufel (9) in bezug auf die sich entsprechend der Spannweite erstreckende und durch die Tiefe der Schaufel (9) gehende Längsebene geneigt und/oder gewölbt sind, so daß die zwischen dem zentralen Körper (14) und der Wand des Kanals (6) befestigte Schaufel (9) gegenüber der Radialrichtung in bezug auf die Achse (X-X) des Kanals (6) geneigt ist.

11. Schaufel-Leiteinrichtung nach einem der Ansprüche 1 bis 10, **dadurch gekennzeichnet**, daß die Befestigungslappen (26, 29, 38a, 38b, 41a, 41b, 44a, 44b) des Fußes (17) und/oder des Kopfes (18) wenigstens einer Schaufel (9) in bezug auf die durch die Tiefe der Schaufel (9) gehende Längsebene geneigt und/oder gewölbt sind, so daß die zwischen dem zentralen Körper (14) und der Wand des Kanals (6) befestigte Schaufel (9) von ihrem Fuß (17) zu ihrem Kopf (18) hin und von der Strömungsoberseite zur Strömungsunterseite hin im Kanal (6) gepfeilt geneigt ist.

12. Verfahren zur Herstellung einer Schaufel (9) einer Leiteinrichtung (8) mit aerodynamischem Profil einerseits zum im wesentlichen koaxialen Stützen eines zentralen Körpers (14) in einem Kanal (6), der einen Hubschrauberheckteil durchquert und eine im wesentlichen quer zum Hubschrauber verlaufende Achse (X-X) hat, und auf der Strömungsunterseite eines im wesentlichen koaxialen Rotors (7), der drehbar auf dem Körper (14) angebracht ist und im Kanal (6) dreht, und andererseits zum Leiten des durch die Drehung des Rotors (7) erzeugten Luftstromes im Kanal (6) auf der Strömungsabwärtsseite des Rotors (7), **dadurch gekennzeichnet**, daß es die Schritte aufweist, die darin bestehen:
- ein hohles metallisches Profil von einem Querschnitt, der dem aerodynamischen Profil der Schaufel (9) entspricht, strangzupressen,
- ein Profilstück (9') von einer Länge, die zumindest gleich der Spannweite des profilierten Teils der Schaufel (9) ist, abzuschneiden,
- an wenigstens einem Ende des Profilstücks (9') einen Ansatz (25, 28, 36, 39, 42) anzuordnen, der mindestens mit einem Befestigungslappen (26, 29, 38a, 38b, 41a, 41b, 44a, 44b) zur Befestigung des Ansatzes am Körper (14) bzw. an der Wand des Kanals (6) versehen ist.

13. Verfahren nach Anspruch 12, **dadurch gekennzeichnet**, daß es darüber hinaus Schritte umfaßt, die darin bestehen, wenigstens ein Endteil (17', 18') des Profilstücks (9') in Höhe der Vorderkante (21) und der Hinterkante (22) der Schaufel (9) zu krümmen, um wenigstens eine Verlängerung der Saugseite (19) und wenigstens eine Verlängerung der Druckseite (20) zu bilden, und dann diese Verlängerungen quer zur Schaufel (9) zu krümmen, um die Befestigungslappen (26, 29) zu formen.

14. Verfahren nach einem der Ansprüche 12 und 13, **dadurch gekennzeichnet**, daß es darüber hinaus einen Schritt umfaßt, der darin besteht, chemisch zumindest das Äußere des Mittelteils (24) des hohlen Profilstücks (9') zu bearbeiten, um dessen Dicke zu verringern.

15. Verfahren nach einem der Ansprüche 12 bis 14, **dadurch gekennzeichnet**, daß es darin besteht, wenigstens einen Befestigungslappen (26, 29, 38a, 38b, 41a, 41b, 44a, 44b) eines Schaufelansatzes (25, 28, 36, 39, 42) zu wölben und/oder zu neigen, um eine Formanpassung des Lappens an die Form des Körpers (14) oder der Wand des Kanals (6) und/oder die gepfeilte Neigung der Schaufel (9) vom Körper (14) zum Kanal (6) hin und von der Strömungsoberseite zur Strömungsunterseite des Kanals (6) hin und/oder in bezug auf die Radialrichtung im Kanal (6) zu erlauben.
